# EUROPÄISCHE PATENTSCHRIFT

(11) **EP 1 854 525 B1**
(45) Veröffentlichungstag und Bekanntmachung des Hinweises auf die Patenterteilung: **26.08.2009**
(21) Anmeldenummer: 06009604.7
(22) Anmeldetag: 10.05.2006
(51) Int. Cl.: B01D 29/41, B01D 33/21, B01D 35/26

(54) **Filtervorrichtung**
Filtering device
Dispositif de filtration

(43) Veröffentlichungstag der Anmeldung: 14.11.2007
(73) Patentinhaber: Grundfos Management A/S, 8850 Bjerringbro (DK)
(72) Erfinder: Beldring, Finn, 2830 Virum (DK); Rasmussen, Christian, Hammershoj 8830 Tjele (DK)
(74) Vertreter: Vollmann, Heiko

(56) Entgegenhaltungen:
- EP-A- 1 149 619
- DE-U1- 20 210 294
- PATENT ABSTRACTS OF JAPAN Bd. 018, Nr. 575 (C-1268), 4. November 1994 (1994-11-04) -& JP 06 210295 A (HITACHI PLANT ENG & CONSTR CO LTD; others: 01), 2. August 1994 (1994-08-02)

## Beschreibung

Die Erfindung betrifft eine Filtervorrichtung mit den im Oberbegriff des Anspruchs 1 angegebenen Merkmalen. Derartige Filtervorrichtungen bestehen typischerweise aus Stapeln von hohlen Filterplatten, die in einem im Wesentlichen zylindrischen Filtergehäuse ggf. auch rotierend angeordnet sind. Die zu filternde Flüssigkeit wird in das Gehäuse eingeleitet, gelangt durch die im Bereich der Oberfläche der Filterplatten gebildeten Filter in das Innere der Platten und von dort in einen zentralen Kanal, über welchen die gefilterte Flüssigkeit abgezogen wird. Derartige Filterplatten sind beispielsweise aus JP 062 10 295, DE 196 24 176 A1 oder EP 0 723 799 A1 bekannt, entsprechende Filteranordnungen sind aus DE 196 24 176 A1 sowie US-PS 5,326,512 bekannt.

Da das Filtergehäuse meist von einer Stirnseite mit der zu filternden Flüssigkeit beaufschlagt wird, sammelt sich das vom Filter zurückgehaltene Gut typischerweise an dem von der Zufuhröffnung abgewandten Ende der Filtervorrichtung. Wenn sich hier ein zäher Filterschlamm bildet, kann es problematisch sein, diesen aus der Filtervorrichtung zu entfernen. Spül- und Rückspülvorgänge sind ungünstig, da sie den kontinuierlichen Filterbetrieb unterbrechen.

Vor diesem Hintergrund liegt der Erfindung die Aufgabe zugrunde, eine gattungsgemäße Filtervorrichtung so auszubilden, dass eine Abfuhr der in der Vorrichtung verbleibenden Filtermasse verbessert wird.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung der Zeichnung angegeben.

Die erfindungsgemäße Filtervorrichtung weist ein Gehäuse auf, in dem mindestens zwei, typischerweise ein Stapel, von durch eine Welle angetriebenen Rotationskörpern angeordnet sind. Gemäß der Erfindung sind die Rotationskörper dabei zur Erzeugung einer Kreiselpumpwirkung ausgebildet und angeordnet, wobei zwischen den Rotationskörpern mindestens eine Leiteinrichtung vorgesehen ist, die die Druckseite eines ersten Rotationskörpers mit der Saugseite des in Strömungsrichtung dahinter angeordneten Rotationskörpers verbindet, wobei in dieser Filtervorrichtung entweder die Rotationskörper selbst oder aber oder auch zusätzlich die Zwischenräume zwischen den Rotationskörpern mit einer Filteranordnung versehen sind.

Grundgedanke der vorliegenden Erfindung ist es, den Transport der von der Filteranordnung zurückgehaltenen Filtermasse innerhalb des Filtergehäuses dadurch zu verbessern, dass mindestens zwei, vorzugsweise mehrere der Rotationskörper, zur Erzeugung einer Kreiselpumpwirkung ausgebildet und angeordnet sind, wobei innerhalb des Filtergehäuses zwischen den die Kreiselpumpwirkung erzeugenden Rotationskörpern eine Leiteinrichtung vorgesehen ist, die dafür sorgt, dass die Druckseite eines ersten Rotationskörpers mit der Saugseite eines in Strömungsrichtung dahinter angeordneten Rotationskörpers verbunden wird. Gemäß der Erfindung können die Filteranordnungen dabei entweder rotationskörperseitig oder im Bereich der Zwischenräume zwischen den Rotationskörpern vorgesehen sein. Rotationskörper und Leiteinrichtung sind dabei so angeordnet, dass innerhalb des Filtergehäuses eine Art mehrstufige Pumpe entsteht, so dass das Druckniveau in Strömungsrichtung der Filtermasse vom Eingang bis zum Ausgang ansteigt, was von besonderem Vorteil ist, da nämlich durch den höheren Druck im Bereich des Auslasses der Filtermasse, diese auch dort noch zuverlässig aus der Filtervorrichtung abgeführt wird, selbst wenn es sich hierbei schon um eine zähe Masse in Form eines Breies handelt. Die Rotationskörper, die so ausgebildet und angeordnet sind, dass sie Kreiselpumpwirkung haben, nehmen das Fluid wellennah auf und transportieren dies nach dem Wirkprinzip einer Kreiselpumpe nach außen, wo dann mit Hilfe einer entsprechenden Leiteinrichtung die am Außenumfang des Rotationskörpers höhere Geschwindigkeit der Flüssigkeit in Druck umwandelt, der dann durch die Leiteinrichtung gezielt zur Saugseite des in Strömungsrichtung dahinter angeordneten Rotationskörpers geleitet wird, der wiederum für eine Druckerhöhung sorgt.

Um eine solche Leiteinrichtung möglichst effektiv und mit geringem Bauaufwand zu bilden, ist gemäß einer Weiterbildung der Erfindung vorgesehen, dass mindestens zwei in dem Gehäuse feststehend angeordnete Platten vorgesehen sind, welche Teil der Leiteinrichtung bilden und von denen in Strömungsrichtung gesehen, die erste Platte eine einen wellenfernen Strömungskanal und die in Strömungsrichtung gesehen zweite Platte, einen wellennahen Strömungskanal aufweist oder bildet. Mit Hilfe zwei solcher Platten kann sehr effizient die Strömungsrückführung vom Außenumfang eines Rotationskörpers zum wellennahen Bereich des nachfolgenden Rotationskörpers erfolgen und der dabei aufgrund der Kreiselpumpwirkung erzielte Druckgewinn dem nächsten Rotationskörper nach Art einer mehrstufigen Pumpe zugeführt werden.

Gemäß einer Weiterbildung der Erfindung weist eine oder weisen bevorzugt beide Platten Filteranordnungen auf, wobei diese Platten, da sie feststehend innerhalb des Gehäuses angeordnet sind, zweckmäßigerweise außenseitig über einen dort angeordneten Abfuhrkanal angeschlossen sind, um die gefilterte Flüssigkeit in diesem Bereich abzuziehen.

Grundsätzlich kann gemäß der Erfindung jede geeignete Filteranordnung eingesetzt werden, besonders vorteilhaft ist es jedoch, wenn die Filteranordnung durch eine hohle Filterplatte gebildet wird, wie sie an sich zum Stand der Technik zählt und deren bevorzugte Ausbildung weiter unten beschrieben ist. Eine ideale Pumpwirkung wird erzielt, wenn gemäß einer Weiterbildung der Erfindung der Rotationskörper durch ein Kreiselpumpenlaufrad gebildet wird. Insbesondere wenn mehrere solcher Kreiselpumpenräder innerhalb der Vorrichtung hintereinander geschaltet sind, erfolgt eine intensive Abfuhr der Filtermasse, so dass auch zähe und weitgehend von Flüssigkeit befreite Filtermassen aus der Vorrichtung herausgepumpt werden können.

Eine weniger intensive Pumpwirkung, dafür aber eine kompaktere Filtervorrichtung wird gemäß der Erfindung dadurch erzielt, dass auch die Rotationskörper durch Filterplatten gebildet sind, die zur Abfuhr der gefilterten Flüssigkeit über mindestens einen Kanal mit dem Abfuhrkanal in der Welle leitungsverbunden sind. Dabei kann entweder die Filterplatte selbst die Kreiselpumpwirkung fördernd ausgebildet sein oder aber, ggf. auch zusätzlich, mit einer erhöhten Geschwindigkeit angetrieben sein, um eine geeignete Pumpwirkung zu erzielen.

Erfindungsgemäß ist die den Rotationskörper bildende Filterplatte mit einer saugmundartigen Durchbrechung nahe dem Außenumfang der Welle ausgebildet, so dass das innerhalb des Filtergehäuses zu fördernde Fluid wellennah die Filterplatte durchdringt, dann längs der Filterplattenfläche vom Innen- zum Außenumfang gelangt, wonach innerhalb der Leiteinrichtung die Umwandlung der kinetischen Energie in potentielle, d. h. in Druckgewinn erfolgt. Um einerseits die Abfuhr der innerhalb der Filterplatte gelangten gefilterten Flüssigkeit durch die zentrale Welle zu ermöglichen, andererseits jedoch eine möglichst effiziente Saugmundstruktur im wellennahen Bereich zu schaffen, ist erfindungsgemäß vorgesehen, dass die den Rotationskörper bildende Filterplatte eine zentrale Ausnehmung aufweist, die lediglich über kanalbildende Speichen mit der Welle sowohl mechanisch als auch leitungsverbunden ist. Die Speichen werden zweckmäßigerweise symmetrisch zur Drehachse verteilt angeordnet und sind so zu dimensionieren, dass einerseits ein ausreichender Querschnitt für die Abfuhr der gefilterten Flüssigkeit gebildet ist, andererseits das zum Antrieb des Rotationskörpers erforderliche Drehmoment übertragen werden kann.

Gemäß einer bevorzugten Ausbildung der Erfindung sind die Rotationskörper in Form rotierender Filterplatten ausgebildet, die über die zentrale Welle angetrieben sind und die gefilterte Flüssigkeit durch die zentrale Welle abführen. Auch die Leiteinrichtung ist bevorzugt durch Filterplatten gebildet, die allerdings, da sie drehfest mit dem Gehäuse verbunden sind, über einen Abfuhrkanal innerhalb des Gehäuses zur Abfuhrt der gefilterten Flüssigkeit angeschlossen sind. Das Gehäuse, das vorteilhaft eine im Wesentlichen zylindrische Ausbildung hat, weist vorteilhaft einen Ringkanal als außenseitigen Abfuhrkanal auf. Ein solcher Ringkanal kann auf einfache Weise dadurch gebildet werden, dass das Gehäuse in diesem Bereich doppelwandig ausgebildet ist. Hierdurch wird einerseits ein ausreichender Querschnitt für den Abfuhrkanal gebildet andererseits kann hierdurch eine sehr kompakte Bauform gebildet werden.

Um die Strömungsverluste innerhalb der Filtervorrichtung durch Rückfluss im Bereich der Rotationskörper möglichst niedrig zu halten, ist insbesondere bei der Verwendung von Kreiselpumpenlaufrad innerhalb der Vorrichtung zweckmäßigerweise ein Kreiselpumpenlaufrad so angeordnet, dass der Saugmund des Kreiselpumpenlaufrads bis in die die Welle mit Abstand umgebende Ausnehmung der vorgeschalteten feststehenden Filterplatte ragt.

Insbesondere wenn als Rotationskörper Filterplatten eingesetzt werden, ist es von Vorteil, wenn die Rotationskörper in Gruppen von zwei oder mehr Rotationskörpern angeordnet sind, wobei dann zwischen den Gruppen von Rotationskörpern jeweils eine Leiteinrichtung angeordnet ist. Die Anordnung der rotierend angetriebenen Filterplatten in Gruppen bewirkt eine bessere Kreiselpumpwirkung, insbesondere wenn die Filterplatten im Hinblick auf die Kreiselpumpwirkung nur wenig angepasst sind, sondern lediglich eine saugmundähnliche Ausnehmung im Bereich um die Welle aufweisen und im Übrigen den Ausbildungen nach dem Stand der Technik entsprechen.

Die mit Hilfe der vorbeschriebenen Pumpwirkung durch die Vorrichtung geförderte Filtermasse kann ganz oder teilweise im Kreislauf geführt werden, wobei dann eine entsprechend große Menge von noch zu filternder Flüssigkeit zuzugeben ist, um die Konzentration der Filtermasse im Verhältnis zur Flüssigkeit zu verringern. Die durch die Welle und den Ringkanal am Außenumfang des Gehäuses abgezogene Filterflüssigkeit steht dann der weiteren Verwendung zur Verfügung.

Die erfindungsgemäße Filtervorrichtung kann nicht nur als Filter, sondern bevorzugt auch als Teil eines biologischen Reaktors eingesetzt werden, wobei die Vorrichtung dann gleichzeitig zur Umwälzung der im Reaktor befindlichen Fluide/Massen dient, zumindest diese unterstützt. Es versteht sich, dass dann gegebenenfalls kein geschlossenes Filtergehäuse erforderlich ist, sondern lediglich ein rohrförmiges Gehäuse, das die für die Pumpwirkung erforderliche hydraulische Umgebung schafft.

Die Erfindung ist nachfolgend anhand von in der Zeichnung dargestellten Ausführungsbeispielen näher erläutert. Es zeigen:
- Fig. 1: in stark schematisierter vereinfachter Darstellung einen Längsschnitt durch einen Teil einer Filtervorrichtung gemäß der Erfindung,
- Fig. 2: die Filtervorrichtung gemäß Fig. 1 innerhalb eines Reaktors,
- Fig. 3: eine alternative Ausführungsvariante in Darstellung nach Fig. 2,
- Fig. 4: eine Filtervorrichtung, bei der als Rotationskörper Filterplatten eingesetzt sind in Darstellung nach Fig. 2 und
- Fig. 5: eine Filtervorrichtung, bei der gruppenweise Filterplatten eingesetzt sind in Darstellung nach Fig. 2.

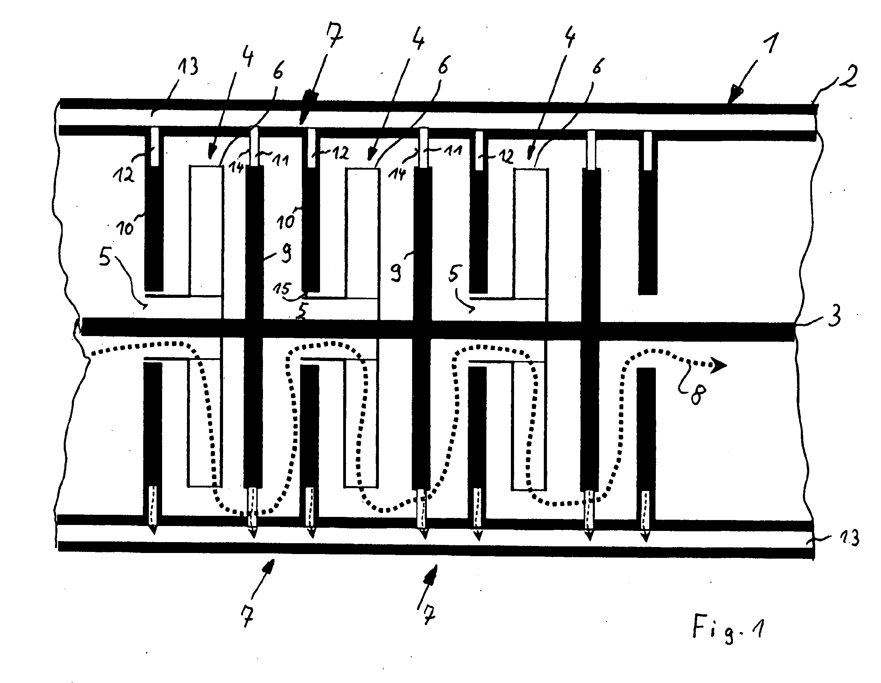

Die anhand von Fig. 1 in einem mittleren Abschnitt dargestellte Filtervorrichtung 1 weist ein zylindrisches Gehäuse 2 auf, nahe dessen in Fig. 1 linken Ende ein Einlass für die zu filternde Flüssigkeit vorgesehen ist. In analoger Weise ist an dem in Darstellung gemäß Fig. 1 gesehenen rechten Ende der Filtervorrichtung ein Auslass für die nach dem Filtervorgang im Gehäuse 6 verbleibende Filtermasse vorgesehen.

Zentral durch das Gehäuse 2 läuft eine Welle 3, die in den nicht dargestellten stirnseitigen Deckeln des Gehäuses 2 gelagert und mittels eines außerhalb des Gehäuses 2 angeordneten Motors drehbar angetrieben ist. Auf der Welle 3 sitzen drehfest eine Vielzahl von Rotationskörpern in Form von Kreiselpumpenlaufrädern 4. Die in Fig. 1 nur schematisch darstellten Kreiselpumpenlaufräder 4 weisen jeweils einen Saugmund 5 und eine radial außen angeordnete Druckseite 6 auf und sind jeweils durch Leiteinrichtungen 7 innerhalb des Gehäuses 2 vom benachbarten Laufrad 4 hydraulisch getrennt, derart, dass die Druckseite 6 eines Laufrads über die Leiteinrichtung 7 mit den Saugmund 5 des in Durchströmungsrichtung des Gehäuses 2 nachfolgenden Laufrades 4 hydraulisch verbunden. Jede Leiteinrichtung 7 besteht aus einer in Strömungsrichtung 8 gesehen in dem Gehäuse feststehend angeordneten ersten Filterplatte 9 sowie einer dazu mit Abstand angeordneten zweiten Filterplatte 10. Bei den Filterplatten handelt es sich um hohle Platten, welche über ihre gesamte Oberfläche einen mechanischen Filter bilden, durch den die in Filtervorrichtung 1 befindliche Flüssigkeit, nicht jedoch die darin befindlichen Schwebstoffe hindurchtreten können. Die Filterplatten 9 und 10 sind fest mit dem Gehäuse 2 verbunden, wobei ihr Innenraum über radiale Kanäle 11 und 12 in einem gehäuseseitigen Abfuhrkanal 13 münden, der durch einen Ringkanal des in diesem Bereich doppelwandig ausgebildeten Gehäuses 2 gebildet ist. Die durch die Filterplatten 9 und 10 in das Innere der Platten eindringende und dann gefilterte Flüssigkeit wird über die Kanäle 11 und 12 in den Abfuhrkanal 13 und von dort aus der Filtervorrichtung 1 herausgeleitet.

Die jeweils erste Filterplatte 9 einer Leiteinrichtung 7 reicht bis zur Welle 3 und ist gegenüber dieser abgedichtet. Radial nach außen endet jede erste Filterplatte 9 mit deutlichem Abstand zur Innenseite des Gehäuses 2 und ist im Bereich seiner radialen Außenseite über Speichen 14 mit dem Gehäuse 2 verbunden, deren Inneres die radialen Kanäle 9 bilden. Diese Speichen 14 sorgen dafür, dass zwischen der Filterplatte 9 und der Innenwandung des Gehäuses 2 ein ausreichender Freiraum verbleibt, so dass die vom Kreiselpumpenlaufrad 4 über den Saugmund 5 angesaugte und an der Druckseite 6 des Rades 4 radial austretende Flüssigkeit um etwa 180° umgelenkt wird, um dann zwischen der ersten Filterplatte 9 und der zweiten Filterplatte 10 wieder in Richtung zur Welle 3 und somit zum Saugmund 5 des in Durchströmungsrichtung 8 nächst folgenden Laufrades 4 gelangt. Hierzu weist die zweite Filterplatte 10 eine zentrale Ausnehmung 15 auf, in welche der Saugmund 5 des Kreiselpumpenlaufrades 4 eingreift. Die Außenseite der zweiten Filterplatte 10 schließt bündig und dicht an die Innenseite des Gehäuses 2 an, wobei radiale Kanäle 12 vorgesehen sind, welche das Innere der zweiten Filterplatte 10 mit dem Abfuhrkanal 13 verbinden.

Da innerhalb der Filtervorrichtung 1 eine Vielzahl solcher Kreiselpumpenlaufräder 4 mit nachgeschalteter Leiteinrichtung 7 hintereinander angeordnet sind und über die Leiteinrichtung 7 der Druckgewinn eines in Strömungsrichtung 8 davor liegenden Laufrads 4 zum Saugmund des dahinter liegenden Laufrades 4 geleitet wird, arbeitet die Filtervorrichtung 1 nach dem Prinzip einer mehrstufigen Pumpe, d. h. der Druck innerhalb des Gehäuses 2 steigt in Fig. 1 von links nach rechts nach jedem Laufrad 4 an. Dies hat den Effekt, dass in Durchströmungsrichtung 8 aufgrund des Druckanstiegs zum einen eine intensiver werdende Flüssigkeitsabfuhr durch die Filterplatten 9 und 10 erfolgt und zum anderen die innerhalb der Filtervorrichtung 1 verbleibende Masse mit erhöhtem Druck in Richtung 8 und somit zum Ausgang der Filtervorrichtung 1 gefördert wird. Es entsteht also eine intensive Filterung bei gleichzeitig kontinuierlicher Abfuhr der in der Vorrichtung anfallenden Restmasse, die ausgangsseitig eine breiartige Konsistenz aufweisen kann.

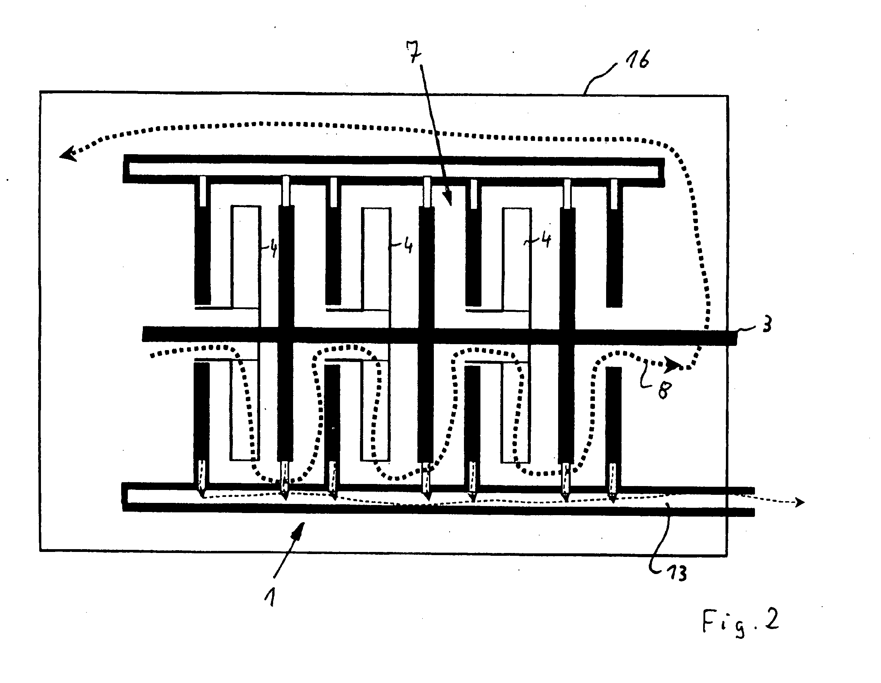

Bei der Darstellung gemäß Fig. 2 ist schematisch angedeutet, wie die anhand von Fig. 1 vorbeschriebene Filtervorrichtung innerhalb eines Reaktors angeordnet werden kann. Solche Reaktoren werden beispielsweise zur Behandlung von Abwasser eingesetzt. Das Reaktorgehäuse ist mit 16 gekennzeichnet und weist typischerweise neben der eigentlichen Filtervorrichtung noch weitere Aggregatteile auf, ist jedoch, da die übrigen Aggregatteile für die Verwirklichung der Erfindung nicht wesentlich sind, hier nur bezogen auf die Filtervorrichtung, dargestellt. Es versteht sich, dass das Aggregatgehäuse typischerweise ein Vielfaches der Längsausdehnung der Filtervorrichtung 1 aufweist. Der zentrale Abfuhrkanal 13 ist, wie Fig. 2 zeigt, aus dem Reaktorgehäuse 16 herausgeführt, wohingegen der Förderstrom durch die Filtervorrichtung 1 in Kreislauf geführt ist, es sind allerdings geeignete Maßnahmen zur Abfuhr der verbleibenden Masse vorgesehen. Wie dieses Ausführungsbeispiel insbesondere verdeutlichen soll, weist in diesem Falle die Filtervorrichtung 1 kein geschlossenes, sondern ein an den Endseiten offenes Gehäuse auf, da hier das Gehäuse lediglich die Aufgabe hat, im Bereich der Kreiselpumpenlaufräder 4 und der Leiteinrichtungen 7 den erforderlichen hydraulischen Abschluss nach außen hin zu gewährleisten, wohingegen die eigentliche Gehäusefunktion durch das Reaktorgehäuse 16 sichergestellt ist. Die dargestellte Filtervorrichtung 1 kann typischerweise zur Umwälzung der im Reaktor befindlichen Fluide dienen, da die Filtervorrichtung 1 die Wirkung einer mehrstufigen Pumpe hat.

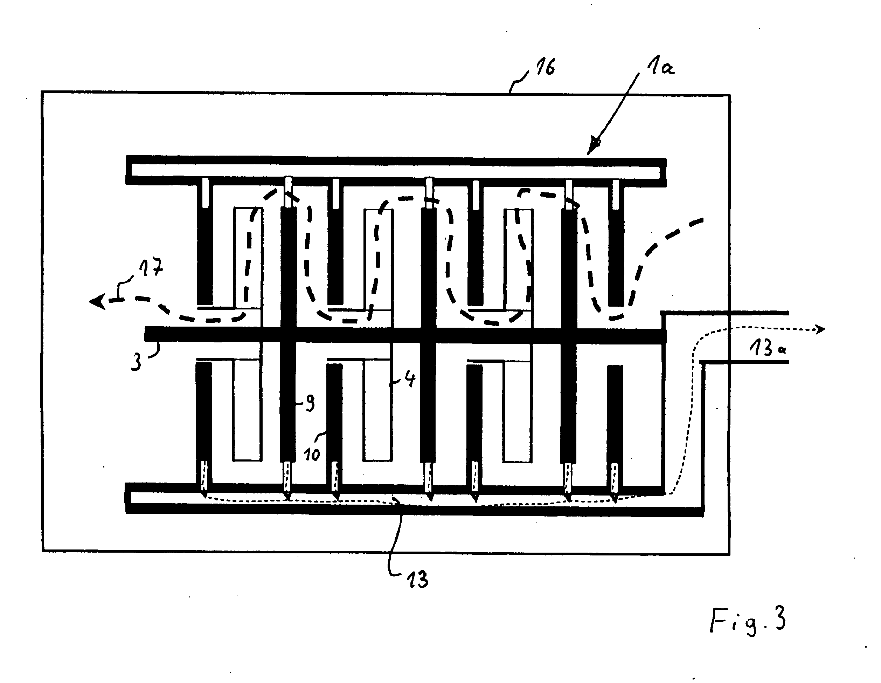

Die in Fig. 3 dargestellte Variante unterscheidet sich von der gemäß Fig. 2 dadurch, dass bei der Filtervorrichtung 1 a die Welle 3 mit den darauf sitzenden Kreiselpumpenlaufrädern 4 fest mit dem Reaktorgehäuse 16 verbunden ist, wohingegen das Gehäuse 2 mit den daran angebrachten Filterplatten 9 und 10 drehbar angetrieben innerhalb des Reaktorgehäuses ist. Hierzu ist der Abfuhrkanal 13 in einen zentralen Kanal 13a geführt, welcher konzentrisch zur Drehachse des Gehäuses und mittig aus dem Reaktorgehäuse 16 herausgeführt ist. Die Durchströmrichtung 17 durch die Filtervorrichtung 1 a ist demgemäß genau entgegengesetzt zu der Durchströmrichtung 8 der Filtervorrichtung 1.

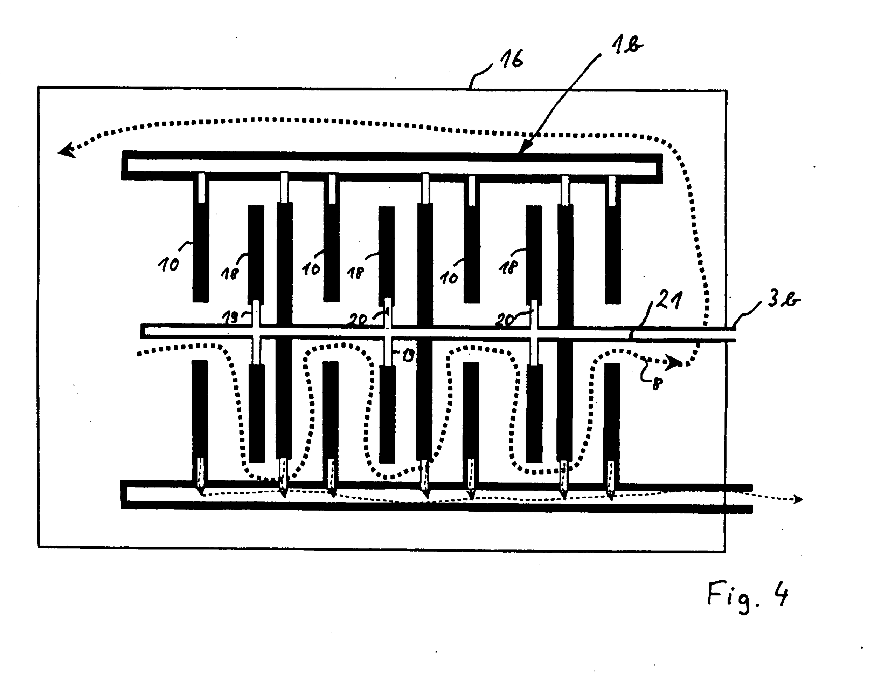

Die in dem Reaktorgehäuse 16 nach Fig. 4 angeordnete Filtervorrichtung 1 b unterscheidet sich von der anhand der Fig. 1 und 2 dargestellten Filtervorrichtung 1 dadurch, dass statt der Kreiselpumpenlaufräder 4 Filterplatten 18 eingesetzt sind, welche in gleicher Weise hohl wie die Filterplatten 9 uns 10 sind, die jedoch sowohl mit Abstand zum Gehäuse 2 wie die Filterplatten 9 als auch mit Abstand zur Welle 3b wie die Filterplatten 10 angeordnet sind. Die mechanische Verbindung der Filterplatten 18 zur Welle 3b erfolgt über Speichen 19, die vom Innenumfang der Filterplatten 18 radial zur Welle 3 b gerichtet und dort befestigt sind. Die Speichen 19 sind hohl, ebenso wie die Welle 3b, so dass über das Innere der Speichen ein radialer Kanal 20 gebildet ist, der in einen zentralen Abfuhrkanal 21 innerhalb der Welle 3b mündet. Durch die Filterplatten 18 wird innerhalb der Filtervorrichtung 1 b zusätzliche Filterfläche geschaffen. Die Pumpwirkung wird dadurch erzielt, dass eine saugmundähnliche zentrale Ausnehmung zwischen Welle und dem Innenumfang der Filterplatte 8 gebildet ist, die lediglich durch die Speichen 19 durchsetzt ist, so dass die in der Filtervorrichtung 1 b befindliche Flüssigkeit zu beiden Seiten der Filterplatte 18, diese umströmen und radial nach außen mitgenommen werden kann, wenn der auf der Welle 3b angeordnete Filterplattenstapel mit ausreichender Geschwindigkeit angetrieben wird. Eine ausreichende Geschwindigkeit ist typischerweise dann gegeben, wenn diese mehr als 3 m/s beträgt, also die Filterplatten 18 zum Gehäuse eine Mindestgeschwindigkeit von mehr als 3 m/s aufweisen. Die Durchströmrichtung 8 entspricht daher etwa der der Filtervorrichtungen 1 bzw. 1 a, wobei die Filterplatten beidseitig umströmt sind.

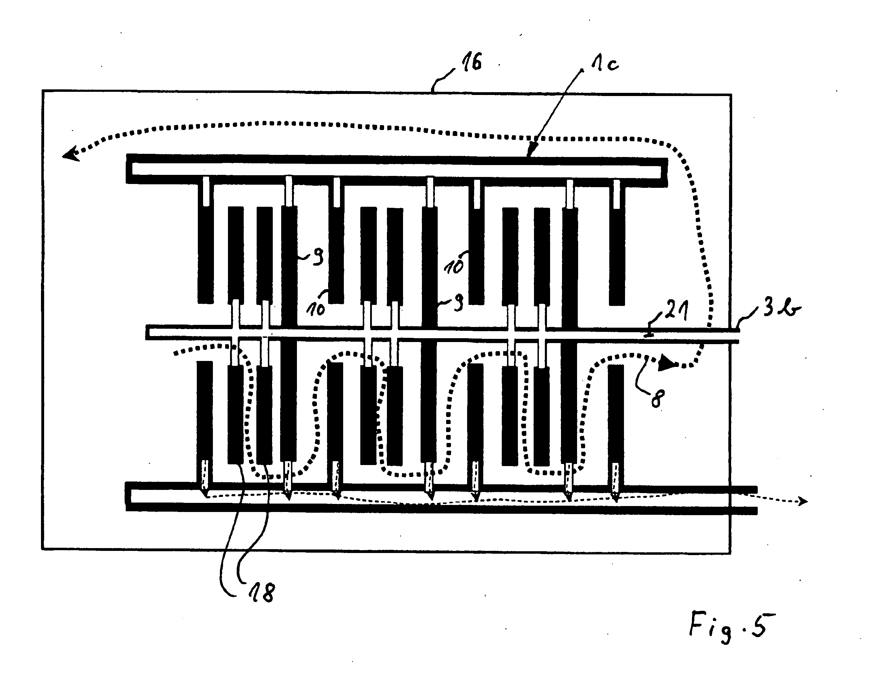

Eine Weiterbildung dieser anhand von Fig. 4 dargestellten Vorrichtung ist in Fig. 5 dargestellt. Dort sind anstelle einzelner Filterplatten 18 diese in Gruppen, hier paarweise angeordnet, so dass jeweils zwischen einem Paar von Filterplatten 18 sich in Durchströmungrichtung 8 eine Leiteinrichtung 7 anschließt. Hierdurch wird zum einen die Filterfläche weiter vergrößert, zum anderen die gegenüber der Kreiselpumpenlaufradanordnung verminderte Pumpwirkung verbessert, da die Flüssigkeit insbesondere im Bereich zwischen einem Filterplattenpaar 18 besonders intensiv radial nach außen mitgenommen wird, wenn die Welle 3b rotiert wird.

### Bezugszeichenliste

- 1: Filtervorrichtung
- 1 a: in Fig. 3
- 1 b: in Fig. 4
- 1 c: in Fig. 5
- 2: Gehäuse
- 3: Welle
- 3b: Welle in den Fig. 4 und 5
- 4: Kreiselpumpenlaufrad
- 5: Saugmund
- 6: Druckseite
- 7: Leiteinrichtung
- 8: Durchströmungsrichtung durch das Gehäuse
- 9: erste Filterplatte
- 10: zweite Filterplatte
- 11: radialer Kanal in 9
- 12: radialer Kanal in 10
- 13: Abfuhrkanal
- 13a: zentraler Abfuhrkanal in Fig. 3
- 14: Speichen
- 15: zentrale Ausnehmung
- 16: Reaktorgehäuse
- 17: Durchströmungsrichtung in Fig. 3
- 18: Filterplatten
- 19: Speichen
- 20: radialer Kanal
- 21: zentraler Abfuhrkanal

## Patentansprüche

1. Filtervorrichtung mit einem Gehäuse (2) und mit mindestens zwei darin angeordneten und durch eine Welle (3) angetriebenen Rotationskörpern (4, 18), **dadurch gekennzeichnet, dass** die Rotationskörper (4, 18) zur Erzeugung einer Kreiselpumpwirkung ausgebildet und angeordnet sind und dass zwischen den Rotationskörpern (4, 18) mindestens eine Leiteinrichtung (7) vorgesehen ist, die die Druckseite (6) eines ersten Rotationskörpers (4, 18) mit der Saugseite (5) eines in Strömungsrichtung dahinter angeordneten Rotationskörpers (4, 18) verbindet und dass die Rotationskörper (4, 18) und/oder die Zwischenräume zwischen den Rotationskörpern (4, 18) mit einer Filteranordnung (9, 10) versehen sind.

2. Vorrichtung nach Anspruch 1, **dadurch gekennzeichnet, dass** die Leiteinrichtung (7) mindestens zwei in dem Gehäuse (2) feststehend angeordnete Platten (9, 10) aufweist, von denen die in Strömungsrichtung (8) gesehene erste Platte (9) einen wellenfernen Strömungskanal und die in Strömungsrichtung (8) gesehen zweite Platte (10) einen wellennahen Strömungskanal aufweist oder bildet.

3. Vorrichtung nach Anspruch 2, **dadurch gekennzeichnet, dass** eine oder beide Platten (9, 10) Filteranordnungen aufweisen, und die vorzugsweise mit einen außenseitig der Platten (9, 10) angeordneten Abfuhrkanal (13) leitungsverbunden sind.

4. Vorrichtung nach einem der vorhergehenden Ansprüche, **dadurch gekennzeichnet, dass** eine Filteranordnung durch eine hohle Filterplatte (9, 10, 18) gebildet ist.

5. Vorrichtung nach einem der vorhergehenden Ansprüche, **dadurch gekennzeichnet, dass** der Rotationskörper durch ein Kreiselpumpenlaufrad (4) gebildet ist.

6. Vorrichtung nach einem der Ansprüche 1 bis 5, **dadurch gekennzeichnet, dass** der Rotationskörper durch eine Filterplatte (18) gebildet ist, die zur Abfuhr der gefilterten Flüssigkeit über mindestens einen Kanal (20) mit einem Abfuhrkanal (21) in der Welle (3b) leitungsverbunden ist.

7. Vorrichtung nach Anspruch 6, **dadurch gekennzeichnet, dass** die den Rotationskörper bildende Filterplatte (18) mindestens eine saugmundartige Durchbrechung nahe dem Außenumfang der Welle (3b) aufweist.

8. Vorrichtung nach Anspruch 6 oder 7, **dadurch gekennzeichnet, dass** die den Rotationskörper bildende Filterplatte (18) eine zentral Ausnehmung aufweist und über kanalbildende Speichen (19) mit der Welle (3b) verbunden ist.

9. Vorrichtung nach Anspruch 3, **dadurch gekennzeichnet, dass** das Gehäuse (2) im Wesentlichen zylindrisch ausgebildet ist und dass der außenseitige Abfuhrkanal (13) durch einen Ringkanal des in diesem Bereich vorzugsweise doppelwandigen Gehäuses (2) gebildet ist.

10. Vorrichtung nach Anspruch 5, **dadurch gekennzeichnet, dass** der Saugmund (5) des Kreiselpumpenlaufrads (4) bis in die die Welle (3) mit Abstand umgebende Ausnehmung der vorgeschalteten feststehenden Filterplatte (10) ragt.

11. Vorrichtung nach einem der vorhergehenden Ansprüche, **dadurch gekennzeichnet, dass** die Rotationskörper (18) in Gruppen von zwei oder mehreren Rotationskörpern (18) angeordnet sind.

## Claims

1. A filter device with a housing (2) and with at least two rotation bodies (4, 18) which are arranged therein and are driven by a shaft (3), **characterised in that** the rotation bodies (4, 18) are designed and arranged for producing a centrifugal pump effect, and that at least one guidance device (7) is provided between the rotation bodies (4, 18), which connects the pressure side (6) of a first rotation body (4, 18) to the suction side (5) of a rotation body (4, 18) arranged therebehind in the flow direction, and that the rotation bodies (4, 18) and/or the intermediate spaces between the rotation bodies (4, 18) are provided with a filter arrangement (9, 10).

2. A device according to claim 1, **characterised in that** the guidance device (7) comprises at least two plates (9, 10) which are arranged in a stationary manner in the housing (2), of which the plate (9) which is the first one seen in the flow direction (8), comprises or forms a flow channel remote to the shaft, and the plate (10) which is the second one seen in the flow direction (8), comprises or forms a flow channel close to the shaft.

3. A device according to claim 2, **characterised in that** one or both plates (9, 10) comprise filter arrangements, which are preferably conductively connected to a discharge channel (13) arranged on the outside of the plates (9, 10).

4. A device according to one of the preceding claims, **characterised in that** a filter arrangement is formed by a hollow filter plate (9, 10, 18).

5. A device according to one of the preceding claims, **characterised in that** the rotation body is formed by a centrifugal pump impeller (4).

6. A device according to one of the claims 1 to 5, **characterised in that** the rotation body is formed by a filter plate (18), which is conductively connected via at least one channel (20) to a discharge channel (21) in the shaft (3b), for the discharge of the filtered fluid.

7. A device according to claim 6, **characterised in that** the filter plate (18) forming the rotation body comprises at least one suction-port-like opening close to the outer periphery of the shaft (3b).

8. A device according to claim 6 or 7, **characterised in that** the filter plate (18) forming the rotation body comprises a central recess, and is connected via channel-forming spokes (19) to the shaft (3b).

9. A device according to claim 3, **characterised in that** the housing (2) is designed in an essentially cylindrical manner, and that the outer-side discharge channel (13) is formed by an annular channel of the housing (2) which is preferably double-walled in this region.

10. A device according to claim 5, **characterised in that** the suction port (5) of the centrifugal pump impeller (4) projects up to into the recess of the previously arranged stationary filter plate (10), said recess surrounding the shaft (3) at a distance.

11. A device according to one of the preceding claims, **characterised in that** the rotation bodies (18) are arranged in groups of two or more rotation bodies (18).

## Revendications

1. Dispositif de filtration comprenant un boîtier (2) et au moins deux corps de révolution (4, 18) logés à l'intérieur de celui-ci et entraînés par un arbre (3), **caractérisé en ce que** les corps de révolution (4, 18) sont conçus et disposés de façon à produire un effet de pompe centrifuge, et **en ce qu'**au moins un dispositif de guidage (7) est prévu entre les corps de révolution (4, 18), qui relie le côté pression (6) d'un premier corps de révolution (4, 18) au côté aspiration (5) d'un corps de révolution (4, 18) placé derrière dans le sens de l'écoulement, et **en ce que** les corps de révolution (4, 18) et/ou les espaces entre les corps de révolution (4, 18) sont pourvus d'une installation à filtres (9, 10).

2. Dispositif selon la revendication 1, **caractérisé en ce que** le dispositif de guidage (7) comporte au moins deux plaques (9, 10) disposées de façon fixe dans le boîtier (2), parmi lesquelles la première plaque (9) en se plaçant dans le sens de l'écoulement (8) comporte ou constitue un canal d'écoulement à distance de l'arbre, et la seconde plaque (10) en se plaçant dans le sens de l'écoulement (8) comporte ou constitue un canal d'écoulement à proximité de l'arbre.

3. Dispositif selon la revendication 2, **caractérisé en ce qu'**une des deux plaques (9,10), ou les deux, comporte(nt) des installations à filtres, et de préférence sont reliées au niveau des conduites à un canal de sortie (13) disposé côté extérieur des plaques (9, 10).

4. Dispositif selon l'une quelconque des revendications précédentes, **caractérisé en ce qu'**une installation à filtres est conçue sous forme d'une plaque de filtre creuse (9, 10, 18).

5. Dispositif selon l'une quelconque des revendications précédentes, **caractérisé en ce que** le corps de révolution est conçu sous forme d'une roue mobile de pompe centrifuge (4).

6. Dispositif selon l'une des revendications 1 à 5, **caractérisé en ce que** le corps de révolution est conçu sous forme d'une plaque de filtre (18) qui, pour l'évacuation des liquides filtrés, est reliée au niveau des conduites via au moins un canal (20) à un canal de sortie (21) dans l'arbre (3b).

7. Dispositif selon la revendication 6, **caractérisé en ce que** la plaque de filtre (18) qui forme le corps de révolution comporte au moins une perforation de type orifice d'aspiration à proximité de la périphérie extérieure de l'arbre (3b).

8. Dispositif selon la revendication 6 ou 7, **caractérisé en ce que** la plaque de filtre (18) qui forme le corps de révolution comporte un creux central et est reliée à l'arbre (3b) via des rayons formant des canaux (19).

9. Dispositif selon la revendication 3, **caractérisé en ce que** le boîtier (2) est conçu sous forme sensiblement cylindrique, et **en ce que** le canal de sortie côté extérieur (13) est formé par un canal annulaire du boîtier (2) qui, dans cette zone, présente de préférence une paroi double.

10. Dispositif selon la revendication 5, **caractérisé en ce que** l'orifice d'aspiration (5) de la roue mobile de pompe centrifuge (4) avance jusque dans le creux de la plaque de filtre fixe en amont (10) qui ceinture l'arbre (3) à une certaine distance.

11. Dispositif selon l'une quelconque des revendications précédentes, **caractérisé en ce que** les corps de révolution (18) sont disposés en groupes de deux corps de révolution (18) ou plus.
